# EUROPEAN PATENT APPLICATION

(11) **EP 2 022 839 A1**
(43) Date of publication of application: **11.02.2009**
(21) Application number: 07743745.7
(22) Date of filing: 15.05.2007
(51) Int. Cl.: C10L 1/08, C10G 45/06, C10G 45/08, C10L 1/00

(54) **GAS-OIL COMPOSITION**

(30) Priority: 17.05.2006 JP 2006138353; 17.05.2006 JP 2006138354
(71) Applicant: Nippon Mitsubishi Oil Corporation, Minato-ku, Tokyo 105-8412 (JP)
(72) Inventor: IGUCHI, Yasutoshi, Yokohama-shi, Kanagawa 231-0815 (JP); SUGANO, Hideaki, Yokohama-shi, Kanagawa 231-0815 (JP); KOYAMA, Akira, Yokohama-shi, Kanagawa 231-0815 (JP); IKI, Hideshi, Yokohama-shi, Kanagawa 231-0815 (JP); AOKI, Yuko, Yokohama-shi, Kanagawa 231-0815 (JP)
(74) Representative: Grünecker, Kinkeldey, Stockmair & Schwanhäusser Anwaltssozietät
(86) International application number: PCT/JP2007/060311
(87) International publication number: WO 2007/132939

(57) **Abstract**

The gas oil-composition of the present invention comprises 10 to 80 percent by volume of a fraction with a 95% distillation temperature of 360°C or lower, a sulfur content of 10 ppm by mass or less and an oxygen content of 1 percent by mass or less, the fraction being produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements and an active metal supported thereon. The resulting gas oil composition has a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less and is excellent in life cycle CO₂ emission properties, ignitability, oxidation stability and low-temperature fluidity.

## Description

### [Field of the Invention]

The present invention relates to gas oil compositions comprising an environment friendly base gas oil produced from a triglyceride-containing hydrocarbon that is an animal or vegetable fat and/or a component originating therefrom, and having excellent life cycle CO₂ emission properties, ignitability, oxidation stability and low-temperature fluidity and the capability of reducing aldehydes in the exhaust gas.

### [Background of the Invention]

Conventional base gas oils are known to be produced by subjecting a straight gas oil or straight kerosene, produced by atmospheric distillation of crude oil to hydrorefining or hydrodesulfurization. Conventional gas oil compositions are produced by blending one or more types of these base gas oils and base kerosenes. If necessary, these gas oil compositions are blended with a cetane number improver or a detergent (see, for example, Konishi Seiichi, "Nenryo Kogaku Gairon", Shokabo Publishing Co., Ltd., March, 1991, pages 136 to 144).

Meanwhile, in recent years, gas oil, which is a fuel for internal combustion engines has been required to be decreased in sulfur and aromatic contents in an effort to improve the air environment and reduce the environment load rapidly. At the same time, in order to cope with the global warming issue, gas oil has also been required to possess fuel properties contributive to a further improvement in fuel consumption and also effective in carbon dioxide (CO₂) reduction. As one means for achieving these objects, it has been studied to use synthetic fuels and bio diesel fuels (hereinafter referred to as "BDF"), which are reproducible energies, as alternative fuels.

Fuel currently referred to as BDF is mainly composed of a fatty acid alkyl ester mixture produced from natural animal and vegetable fats and thus contains almost no aromatic compound largely contributive to the production of soot discharged with an exhaust gas or no sulfur component giving significant influences such as poisoning of an exhaust-gas post-processing catalyst. Furthermore, BDF itself is an oxygen-containing compound having oxygen in its molecules and thus has been attracted as a dominant possibility for an alternative fuel. BDF is positioned as a reproducible energy because it is derived from plants. Thus, the carbon dioxide caused by BDF is not counted as the emissions under the carbon dioxide reduction protocol entered among nations in 1997, so-called "Kyoto Protocol", and BDF has, therefore, political merits.

However, fatty acid alkyl esters produced from natural animal and vegetable fats contain intrinsically a large quantity of heavy components and thus are poor in burnout properties upon combustion in engines, possibly leading to the increased emissions of unburned hydrocarbons. The fatty acid alkyl esters are oxygen-containing compounds and thus have the likelihood that they would increase aldehydes exhausted upon combustion. BDF that contains a large amount of a fatty acid alkyl ester containing many saturated fatty acid groups is poor in handling characteristics as fuel because it is solid at ambient temperatures and would fail to secure low-temperature fluidity. BDF that contains a large amount of unsaturated fatty acid groups is poor in oxidation stability due to its chemical composition and would be deteriorated in color and cause the formation of sludge and adverse affects on engine parts. Further, there is a strong concern that a fatty acid glyceride and an alkyl alcohol, which are raw materials for producing a fatty acid alkyl ester by refining and a glycerin mixture which is by-product thereof adversely affects engine parts and fuel injection systems.

These tendencies are not found in the existing gas oils. Therefore, the same problems arise upon use of BDF not only alone but also in combination with existing gas oil. It is thus necessary to give more concerns to the properties of BDF itself as well as the oxidation stability, low temperature fluidity and combustibility thereof when mixed with an existing gas oil ever before.

Accordingly, the use of BDF, which is a fatty acid alkyl ester mixture produced from a natural animal or vegetable fat can not provide for a gas oil composition that is reduced in harmful exhaust components and aldehydes contained in the exhaust gas and excellent in life cycle CO₂ emission properties, ignitability, high-temperature restartability and oxidation stability. Since these engine performances are closely related to other fuel properties, it is very difficult to produce a fuel of high quality which can satisfy all of these requisite performances in a higher level. Furthermore, there has not existed any example or idea on the basis of studies of a fuel which can satisfy all the performances required for commercially available fuel oils and a realistic process for producing such a fuel.

### [Disclosure of the Invention]

The present invention was made in view of the foregoing situations and has an object to provide a gas oil composition comprising an environment friendly base gas oil produced from a triglyceride-containing hydrocarbon that is an animal or vegetable fat and/or a component originating therefrom and having excellent life cycle CO₂ emission properties, ignitability, oxidation stability and low-temperature fluidity and the capability of reducing aldehydes in the exhaust gas.

The present invention was accomplished as the results of extensive research and study carried out to solve the above problems.

That is, according to a first aspect of the present invention, there is provided a gas oil composition comprising 10 to 80 percent by volume of a fraction with a 95% distillation temperature of 360°C or lower, a sulfur content of 10 ppm by mass or less and an oxygen content of 1 percent by mass or less, the fraction being produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements selected from aluminum, silicon, zirconium, boron, titanium and magnesium and one or more types of metals selected from the group consisting of the Groups 6A and 8 metals of the periodic table, supported thereon under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 180 to 480°C, the composition having a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less.

According to a second aspect of the present invention, there is provided a gas oil composition comprising 10 to 80 percent by volume of a fraction with a ratio of the isoparaffin to the normal paraffin of 0.20 or greater, the fraction being produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements selected from aluminum, silicon, zirconium, boron, titanium and magnesium and one or more types of metals selected from the group consisting of the Groups 6A and 8 metals of the periodic table, supported thereon under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 180 to 480°C to produce a fraction with a 95% distillation temperature of 360°C or lower, a sulfur content of 10 ppm by mass or less and an oxygen content of 1 percent by mass or less, followed by hydrogenation with a catalyst comprising one or more types of metals selected from the group consisting of the Groups 6A and 8 metals of the periodic table, supported on a support containing a crystalline molecular sieve under conditions where the hydrogen pressure is from 2 to 13 MPa, the liquid hourly space velocity is from 0.1 to 3.0 h⁻¹, the hydrogen oil ratio is from 250 to 1500 NL/L, and the reaction temperature is from 150 to 380°C, the composition having a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less.

The gas oil composition according to the first aspect of the present invention is preferably 40 percent by volume or more in an evaporation fraction at 300 °C "E300" and from 0.05 or more to 0.25 or less in a ratio of the isoparaffin with two or more branches in the isoparaffin.

The gas oil composition according to the second aspect of the present invention is preferably 0.60 or greater in a ratio of the isoparaffin to the normal paraffin.

The gas oil compositions according to the first and second aspects of the present invention preferably have a density at 15°C of 750 kg/m³ or greater, a pour point of -7.5°C or lower and a cold filter plugging point of -5°C or lower.

### [Effects of the Invention]

The gas oil compositions of the present invention contain an environment friendly base gas oil produced from an animal or vegetable fat and/or a component originating therefrom and thus have excellent life cycle CO₂ emission properties, ignitability, oxidation stability and low-temperature fluidity and the capability of reducing aldehydes in the exhaust gas, all of which were difficult to achieve with the conventional gas oil compositions.

### [Best Mode of Carrying out the Invention]

The present invention will be described in more detail below.

Used as a component of the gas oil composition according to the first aspect of the present invention is a fraction (environment friendly base gas oil) with a 95% distillation temperature of 360°C or lower, a sulfur content of 10 ppm by mass or less and an oxygen content of 1 percent by mass or less, produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements selected from aluminum, silicon, zirconium, boron, titanium and magnesium and one or more types of metals selected from the group consisting of the Groups 6A and 8 metals of the periodic table, supported thereon under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 180 to 480°C.

Used as a component of the gas oil composition according to the second aspect of the present invention is a fraction (environment friendly base gas oil) with a ratio of the isoparaffin to the normal paraffin of 0.20 or greater, produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements selected from aluminum, silicon, zirconium, boron, titanium and magnesium and one or more types of metals selected from the group consisting of the Groups 6A and 8 metals of the periodic table, supported thereon under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 180 to 480°C to produce a fraction with a 95% distillation temperature of 360°C or lower, a sulfur content of 10 ppm by mass or less and an oxygen content of 1 percent by mass or less, followed by hydrogenation with a catalyst comprising one or more types of metals selected from the group consisting of the Groups 6A and 8 metals of the periodic table, supported on a support containing a crystalline molecular sieve under conditions where the hydrogen pressure is from 2 to 13 MPa, the liquid hourly space velocity is from 0.1 to 3.0 h⁻¹, the hydrogen oil ratio is from 250 to 1500 NL/L, and the reaction temperature is from 150 to 380°C.

The environment friendly base gas oils used in the present invention are fractions with low sulfur and oxygen contents, produced by hydrotreating a specific feedstock.

Used as the feedstock is an animal or vegetable fat or a component originating therefrom. Examples of the animal or vegetable fat or the component originating therefrom used herein include natural or artificially made or produced animal or vegetable fats, animal or vegetable fat components and components made or produced from these fats. Examples of raw materials of the animal fats and animal oils include beef tallow, milk fat (butter), lard, mutton tallow, whale oil, fish oil, and liver oil. Examples of raw materials of the vegetable fats and vegetable oils include the seeds and other parts of coconut, palm tree, olive, safflower, rape (rape blossoms), rice bran, sunflower, cotton seed, corn, soy bean, sesame, and flaxseed. The use of fats and oil other than these would not create any problem. The feedstocks may be of solid or liquid but are preferably produced from vegetable fats or vegetable oils with the objective of easy handling, carbon dioxide absorptivity, and high productivity. Alternatively, waste oils resulting from the use of these animal and vegetable oils for household, industry and food preparation purposes may be used as the feedstock after the residual matters are removed from these oils.

Examples of the typical composition of the fatty acid part of the glyceride compounds contained in these feedstocks include fatty acids, so-called saturated fatty acids having no unsaturated bond in the molecules, such as butyric acid (C₃H₇COOH), caproic acid (C₅H₁₁COOH), caprylic acid (C₇H₁₅COOH), capric acid (C₉H₁₉COOH), lauric acid (C₁₁H₂₃COOH), myristic acid (C₁₃H₂₇COOH), palmitic acid (C₁₅H₃₁COOH), stearic acid (C₁₇H₃₅COOH), and so-called unsaturated fatty acids having one or more unsaturated bonds in the molecules, such as oleic acid (C₁₇H₃₃COOH), linoleic acid (C₁₇H₃₁COOH), linolenic acid (C₁₇H₂₉COOH) and ricinoleic acid (C₁₇H₃₂(OH)COOH). In general, the hydrocarbon parts of these fatty acids contained in substances existing in nature are mostly of straight chain. However, the fatty acid may be any of those having a side chain structure, i.e., isomers as long as the properties defined by the present invention are satisfied. The unsaturated fatty acid may be any of those existence of which are generally recognized in nature as well as those having an unsaturated bond per molecule, the position of which is adjusted through chemical synthesis as long as the properties defined by the present invention are satisfied.

The above-described feedstocks (animal or vegetable fats and components originating therefrom) contain one or more of these fatty acids, which vary depending on the raw materials. For example, coconuts oil contains a relatively large amount of saturated fatty acids such as lauric acid and myristic acid while soy bean oil contains a large amount of unsaturated fatty acids such as oleic acid and linoleic acid.

There- is no particular restriction on the sulfur-containing compounds contained in the feedstock. Specific examples include sulfide, disulfide, polysulfide, thiol, thiophene, benzothiophene, dibenzothiophene, and derivatives thereof. The sulfur-containing hydrocarbon compound contained in the feedstock may be a single compound or a mixture of two or more types of these compounds.

Hydrotreating of the feedstock are carried out preferably under conditions where the hydrogen pressure is in the range of 2 to 13 MPa, the liquid hourly space velocity (LHSV) is in the range of 0.1 to 3.0 h⁻¹ and the hydrogen/oil ratio is in the range of 150 to 1500 NL/L, more preferably under conditions where the hydrogen pressure is in the range of 3 to 12 MPa, the liquid hourly space velocity is in the range of 0.2 to 2.0 h⁻¹, and the hydrogen/oil ratio is in the range of 200 to 1200 NL/L, more preferably under conditions where the hydrogen pressure is in the range of 4 to 10.5 MPa, the liquid hourly space velocity is in the range of 0.25 to 1.0 h⁻¹, and the hydrogen/oil ratio is in the range of 300 to 1000 NL/1. Each of the conditions is a factor exerting an influence on the reaction activity. For example, if the hydrogen pressure and hydrogen/oil ratio are less than the lower limits, the reactivity tends to reduce, and the activity tends to reduce rapidly. If the hydrogen pressure and hydrogen/oil ratio exceed the upper limits, an enormous plant investment for a compressor may be required. Lower liquid hourly space velocity tends to be more advantageous for the reactions. However, if the liquid hourly space velocity is lower than the lower limit, an enormous plant investment for construction of a reactor with an extremely large volume may be required. If the liquid hourly space velocity exceeds the upper limit, the reaction tends to proceed insufficiently.

The reactor may be of a fixed bed mode. That is, supply of hydrogen to the feedstock may be carried out in the form of counter flow or parallel flow. Alternatively, counter flow and parallel flow may be combined in a plurality of reactors. The supply mode of the feedstock is generally down flow. Gas-liquid cocurrent flow may be employed. The reactor may be a single reactor or a combination of a plurality of reactors. A single reactor with the interior segmented into a plurality of catalyst beds may also be employed. In the present invention, the distillate hydrorefined in the reactor is fractionated into predetermined fractions through gas-liquid separation and rectification. Thereupon, if moisture is produced in associated with the reaction and the sulfur components are contained in the oil to be treated, hydrogen sulfide may be generated. Therefore, a gas-liquid separation device or any other by-produced gas removal device may be installed between the plurality of reactors or in the product recovering step.

Hydrogen is generally introduced into a first reactor via its inlet, accompanying the feedstock, before or after the feedstock passes through a heating furnace. Alternatively, hydrogen gas may be introduced from the spaces between the catalyst beds or between a plurality of reactors for the purposes of controlling the temperature in the reactors and maintaining the hydrogen pressure over the whole reactors. Hydrogen to be introduced in such a manner is referred to as "quenching hydrogen". The ratio of the quenching hydrogen to the hydrogen introduced, accompanying the feedstock is preferably from 10 to 60 percent by volume, more preferably from 15 to 50 percent by volume. The ratio of less than the lower limit would cause a tendency that the reaction at reaction sites in the subsequent stages does not proceed sufficiently. The ratio in excess of the upper limit would cause a tendency that the reaction near the inlet of the reactor does not proceed sufficiently.

The support of the hydrorefining catalysts is a porous inorganic oxide. The support is generally an alumina-containing porous inorganic oxide. Examples of other components constituting the support include silica, titania, zirconia and boria. The support is preferably a composite oxide containing alumina and at least one or more components selected from the other constituting components. The support may further contain phosphorus in addition to these components. The total content of the components other than alumina is preferably from 1 to 20 percent by mass, more preferably 2 to 15 percent by mass. If the total content is less than 1 percent by mass, the resulting catalyst fails to obtain a sufficient catalytic surface area and thus would be reduced in activity. If the total content is more than 20 percent by mass, the acidic properties of the support is increased, possibly leading to a reduction in activity caused by the formation of coke. When phosphorus is contained as a support constituting component, the content of phosphorus is from 1 to 5 percent by mass, more preferably from 2 to 3.5 percent by mass in terms of oxide.

There is no particular restriction on the raw materials which are precursors of silica, titania, zirconia and boria. Therefore, a solution-containing silicon, titanium, zirconium, or boron is generally used. For silicon, silicic acid, sodium silicate, and silica sol may be used. For titanium, titanium sulfate, titanium tetrachloride, and various alkoxide salts may be used. For zirconium, zirconium sulfate and various alkoxide salts may be used. For boron, boric acid may be used. For phosphorus, phosphoric acid and alkali metal salts thereof may be used.

The raw materials of these support constituting components other than alumina are preferably added at any stage prior to calcination of the support. For example, the raw materials may be added to an aluminum aqueous solution which is then formed into an aluminum oxide gel containing these support constituting components, or may be added to a prepared aluminum oxide gel. Alternatively, the raw materials may be added at a step of kneading a mixture of water or an acid aqueous solution and a commercially available alumina intermediate or boehmite powder. Preferably, these support constituting components are contained in an aluminum oxide gel during the process of preparation thereof. Although the mechanism exhibiting advantageous effects attained by addition of these support constituting components other than alumina has not been elucidated, it is assumed that these components form a complex oxide state together with aluminum. It is thus presumed that this increases the surface area of the support and cause some interaction with the active metals, thereby giving influences to the activity of the catalyst.

The hydrogenating catalyst contains at least one metal, preferably two or more metals selected from the Groups 6A and 8 metals of the periodic table, as an active metal. Example of such metals include Co-Mo, Ni-Mo, Ni-Co-MO, and Ni-W. Upon hydrogenation, these metals are converted to be in the form of sulfides before being used.

The total supported amount of the active metals, for example, W and Mo is preferably from 12 to 35 percent by mass, more preferably from 15 to 30 percent by mass, in terms of oxide, of the catalyst mass. If the amount is less than the lower limit, the catalytic activity would be reduced because the number of active sites is reduced. If the amount is more than the upper limit, the metals fail to disperse effectively, possibly leading to a reduction in catalytic activity. The total supported amount of Co and Ni is preferably from 1.5 to 10 percent by mass, more preferably from 2 to 8 percent by mass, in terms of oxide, of the catalyst mass. If the amount is less than 1. 5 percent by mass, a sufficient co-catalytic effect can not be attained, possibly leading to a reduction in catalytic activity. If the amount is more than 10 percent by mass, the metals fail to disperse effectively, possibly leading to a reduction in catalytic activity.

The reaction temperature can be arbitrarily adjusted so as to obtain the intended decomposition rate of the heavy fraction of the feedstock or the intended fraction yield. Furthermore, the reaction temperatures in the pretreatment catalyst section and the hydrocracking catalyst section of the reactor can be arbitrarily adjusted, respectively so as to suppress the oxygen content of the distillate treated with the pretreatment catalyst to a level lower than the aforesaid upper limit. The average temperature in the whole reactor is set to generally from 180 to 480°C, preferably from 220 to 400°C, more preferably from 260 to 360°C. If the reaction temperature is lower than the lower limit, the reaction would not proceed sufficiently. If the reaction temperature exceeds the upper limit, excessive decomposition would proceed and the yield of the liquid product would be reduced.

There is no particular restriction on the method of supporting the active metals on any of the hydrogenating catalysts. Therefore, any conventional method for producing a usual desulfurization catalyst may be employed. A method is preferably employed in which a support is impregnated with a solution containing salts of the active metals. Alternatively, an equilibrium adsorption method, pore-filling method, or incipient-wetness method is also preferably used. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

The above-described treatment results in the production of a fraction with a 95% distillation temperature of 360°C or lower, a sulfur content of 10 ppm by mass or less and an oxygen content of 1 percent by mass or less (environment friendly base gas oil used in the first aspect of the present invention).

In the second aspect of the present invention, the fraction with a 95% distillation temperature of 360°C or lower, a sulfur content of 10 ppm by mass or less and an oxygen content of 1 percent by mass or less produced through the above-described treatment (first hydrogenation step) is further hydrogenated with a catalyst comprising one or more types of metals selected from the group consisting of the Groups 6A and 8 metals of the periodic table, supported on a support containing a crystalline molecular sieve under conditions where the hydrogen pressure is from 2 to 13 MPa, the liquid hourly space velocity is from 0.1 to 3.0 h⁻¹, the hydrogen oil ratio is from 250 to 1500 NL/L, and the reaction temperature is from 150 to 380°C thereby producing a fraction with a ratio of the isoparaffin to the normal paraffin of 0.20 or greater (environment friendly base gas oil of the second aspect of the present invention).

That is, preferably in the second aspect of the present invention, the feedstock is hydrogenated in the first hydrogenation step to remove 70 percent by mass or more of the oxygen contained in the feedstock and then further hydrogenated in the second hydrogenation step to remove 95 percent by mass or more of the remaining oxygen on the basis of the oxygen content of the feedstock, so that the ratio of isoparaffin / normal paraffin in the paraffin contained in the refined oil is 0.2 or greater.

If the molar ratio is less than 0.2, the resulting gas oil would fail to maintain sufficient fluidity under low temperature environment or invite troubles such as plugging of the fuel filtration system in a diesel engine caused by crystals precipitating under low temperature environment.

The isoparaffin/normal paraffin ratio is determined using GC-TOFMS. In GC-TOFMS, a sample is subjected to gas chromatography to separate its constituents, each of which is then ionized. The ions are then mass-separated by making use of the fact that the flight speed differs according to the ion mass when a given acceleration voltage is applied to ions, and a mass spectrum is obtained according to differences in arrival time at the ion detector. The ionization method in GC-TOFMS is preferably FI ionization method because the formation of fragmented ions is suppressed and accuracy in measurement of the molar ratio of isoparaffin to normal paraffin can be improved. The measuring devices and conditions used in the present invention are as follows:
(GC section)
Device: HP6890 Series GC System & Injector manufacture by HEWLETT PACKARD DEVLOPMENT COMPANY, L.P.
Column: A glient HP-5 (30 m x 0.32 mmΦ, 0.25 µm-film)
Carrier Gas: He, 1.4 mL/minute (constant flow) Inlet Temperature: 320°C
Injection Mode: split (split ratio = 1:100)
Oven Temperature: 50°C kept for 5 minutes,
increased by 5°C/minute, 320°C kept for 6 minutes
Injection Volume: 1 µL
(TOFMS section)
Device: JMS-T100GC manufactured by JEOL Ltd.
Counter Electrode Voltage: 10.0 kV
Ionization Method: FI + (Field Ionization)
GC Interface Temperature: 250°C
Measured Mass Range: 35 to 500

On the basis of the measured date, the molar ratio of the isoparaffin to the normal paraffin can be obtained by determining the ratio of the total strength of isoparaffin to the total strength of normal paraffin every component with the same carbon number. The molar ratio may be obtained directly from the mass spectrum. Alternatively, on the basis of the mass spectrum data, a graph may be plotted, which shows the relation of the retention time and strength of every component with the same carbon number obtained through gas chromatography, and the peak area ratio of each component may be defined as the-molar ratio.

If the removal rate of the oxygen in the first hydrogenation step is less than 70 percent by mass, hydrodeoxidization or hydroisomerization may not proceed sufficiently in the second hydrogenation step.

In the second hydrogenation step, hydrogenation is carried out using a catalyst comprising one or more types of metals selected from the group consisting of the Groups 6A and 8 metals of the periodic table, supported on a support containing a crystalline molecular sieve under conditions where the hydrogen pressure is from 2 to 13 MPa, preferably from 5 to 10 MPa, the liquid hourly space velocity is from 0.1 to 3.0 h⁻¹, preferably from 0.5 to 2.0 h⁻¹, the hydrogen oil ratio is from 250 to 1500 NL/L, preferably from 400 to 1000 NL/L, and the reaction temperature is from 150 to 380°C, preferably from 200 to 350°C.

Preferably, the crystalline molecular sieve contained in the catalyst contains at least silicon so as to provide the catalyst with sufficient hydrodeoxidization and hydroisomerization activities. Preferably, in addition to silicon, the support contains constituting elements such as aluminum, zirconium, boron, titanium, gallium, zinc, and phosphorus. More preferably, the support contains aluminum, zirconium, boron; titanium, and phosphorus. The catalyst containing these elements can facilitate hydrodeoxidization reaction and skeletal isomerization reaction of hydrocarbons simultaneously and achieve the improved low temperature properties of the resulting produced oil.

With regard to the elements constituting the aforesaid crystalline molecular sieve, other than oxygen, the ratio of {the number of silicon atom}/{the number of atom of elements other than silicon} is preferably 3 or more, more preferably 10 or more, more preferably 30 or more. If the ratio is less than 3, decomposition of paraffin is accelerated, possibly leading to a reduction in activity due to coking.

The pore diameter of the crystalline molecular sieve is preferably 0.8 nm or smaller, more preferably 0.65 nm or smaller. If the diameter is greater than 0.8 nm, decomposition of paraffin may occur. There is no particular restriction on the crystal structure of the crystalline molecular sieve. Examples of the crystal structure include FAU, AEL, MFI, MMW, TON, MTW, *BEA, and MOR defined by International Zeolite Association.

There is no particular restriction on the method of synthesizing the crystalline molecular sieve. As generally known, the molecular sieve may be produced by hydrothermal crystallization method using raw materials of constituting components and an amine compound as a structural indicator. Examples of the raw materials include sodium silicate, colloidal silica, and alkoxide silicate for a silicon-containing compound, and aluminum oxide and sodium aluminate for aluminum. Examples of the structural indicator include tetrapropyl ammonium salt.

If necessary, the crystalline molecular sieve may be subjected to hydrothermal treatment by steam, immersion treatment by an alkali or acid aqueous solution, ion-exchange, surface treatment by basic or acid gas such as gaseous chlorine or ammonia, alone or in combination so as to adjust its physical properties.

Example of the Groups 6A and 8 metals of the periodic table include Co-Mo, Ni-Mo, Co-W, and Ni-W.

One or more types of catalysts may be used in the second hydrogenation step. For the purposes of improving the stability of the refined oil, a catalyst having hydrogenation activity may be charged in any of the stages subsequent to the second hydrogenation process.

In the present invention, the environment friendly base gas oil of the first or second aspect of the present invention produced as described above may be mixed with a hydrorefined oil produced by refining crude oil thereby producing a gas oil composition satisfying specific properties. The environment friendly base gas oil is blended in an amount of preferably 10 percent by mass or more, more preferably 20 percent by mass or more, more preferably 30 percent by mass or more, more preferably 50 percent by mass or more and usually 80 percent by mass or less, preferably 70 percent by mass or less.

Examples of the hydrorefined oil produced by refining crude oil include hydrorefined oils having a gas oil fraction and hydrorefined oils having a kerosene fraction.

These hydrorefined oils may contain a plurality of base gas oil fractions and base kerosene fractions to an extent that the predetermined conditions are satisfied.

Examples of the hydrorefined oil having a gas oil fraction produced by refining crude oil include hydrorefined gas oils and hydrodesulfurized gas oils produced by hydrorefining straight gas oil obtained from an atmospheric distillation unit for crude oil, vacuum gas oil produced by treating straight heavy oil or residue obtained from an atmospheric distillation unit, in a vacuum distillation unit, and catalytic-cracked or hydrotreated oil produced by catalytic-cracking or hydrotreating vacuum heavy gas oil or desulfurized fuel oil.

Hydrogenating of the above-described feedstock (petroleum-based hydrocarbon having a gas oil fraction) is generally carried out under the conditions of a reaction temperature of 170 to 320°C, a hydrogen pressure of 2 to 10 MPa, an LHSV of 0.1 to 2 h⁻¹, and a hydrogen/oil ratio of 100 to 800 NL/L, preferably a reaction temperature of 175 to 300°C, a hydrogen pressure of 2.5 to 8 MPa, an LHSV of 0.2 to 1.5 h⁻¹, and a hydrogen/oil ratio of 150 to 600 NL/l, more preferably a reaction temperature of 180 to 280°C, a hydrogen pressure of 3 to 7 MPa, an LHSV of 0.3 to 1.2 h⁻¹, and a hydrogen/oil ratio of 150 to 500 NL/L. A lower reaction temperature is advantageous for hydrogenation but is not preferable for desulfurization. Lower the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with a large volume is required.

The hydrotreating unit for hydrotreating the feedstock used in the present invention may be of any structure, and a single or a plurality of reactors in combination may be used. Hydrogen may be additionally introduced into the spaces between a plurality of reactors. The hydrotreating unit may be provided with a gas-liquid separation system or a hydrogen sulfide removal system.

The reaction system of the hydrotreating unit is preferably a fixed bed system. Hydrogen may be supplied in counterflow or parallel flow with respect to the feedstock. When the hydrotreating unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrotreating comprises a hydrogenation active metal supported on a porous support. The porous support may be an inorganic oxide. Examples of the inorganic oxide include alumina, titania, zirconia, boria, silica, and zeolite. In the present invention, the support is preferably composed of alumina and at least one type selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any ratio to other oxides on the basis of the porous support. However, the content of alumina is preferably 90 percent by mass or less, more preferably 60 percent by mass or less, more preferably 40 percent by mass or less, of the support mass.

Zeolite is a crystalline alumino silicate. Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, so-called micro pores of 20 Å or smaller and also newly formed pores in the range of 20 to 100 Å. The hydrothermal treatment may be carried out under known conditions.

The active metal of the catalyst used for hydrotreating is at least one metal selected from the Group 6A metals of the periodic table, preferably at least one metal selected from Mo and W. The active metal may be a combination of the Group 6A metals and Group 8 metals, specifically a combination of Mo or W and Co or Ni, such as Co-Mo, Co-W, Ni-Mo, Ni-W, Co-Ni-Mo, and Co-Ni-W.

The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the support. Alternatively, the metal(s) may be supported on the porous support in the form of a suitable oxide, complex oxide or zeolite produced at the intermediate stage of the preparation of the porous support and then may be subjected to gel-preparation or heat-concentration and kneading.

There is no particular restriction on the amount of the active metal(s) to be supported. However, the amount is from 0.1 to 10 percent by mass, preferably from 0.15 to 5 percent by mass, more preferably from 0.2 to 3 percent by mass on the basis of the catalyst mass.

The catalyst is preferably used after it is subjected to a pre-reduction treatment under a hydrogen stream. In general, the active metal (s) are subjected to heat at 200°C or higher in accordance with the predetermined procedures, circulating a gas containing hydrogen and then reduced, thereby exerting hydrogenation activity.

Other than hydrorefined gas oil fractions, hydrorefined kerosene fractions may be used in the present invention. Such kerosene fractions may be those produced by hydrorefining predetermined feedstocks. Mainly used as such feedstocks is straight kerosene produced by vacuum-distillation of crude oil. However, there may be used hydrotreated kerosene co-produced with hydrotreated gas oil and hydrorefined kerosene produced by hydrotreating the aforesaid kerosene fractions. Alternatively, there may be used synthesized kerosene synthesized from natural gas, asphalt, coal, and biomass.

The hydrorefined kerosene fraction used in the present invention may be those produced by hydrotreating (desulfurization and refining) the above-described feedstocks in the presence of a hydrogenation catalyst.

The hydrotreating is generally carried out under the conditions of a reaction temperature of 220 to 350°C, a hydrogen pressure of 1 to 6 MPa, an LHSV of 0.1 to 10 h⁻¹, and a hydrogen/oil ratio of 10 to 300 NL/L, preferably a reaction temperature of 250 to 340°C, a hydrogen pressure of 2 to 5 MPa, an LHSV of 1 to 10 h⁻¹, and a hydrogen/oil ratio of 30 to 200 NL/l, more preferably a reaction temperature of 270 to 330°C, a hydrogen pressure of 2 to 4 MPa, an LHSV of 2 to 10 h⁻¹, and a hydrogen/oil ratio of 50 to 200 NL/L. A lower reaction temperature is advantageous for hydrogenation but is not preferable for desulfurization. Higher the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with an extremely large volume is required.

The hydrotreating unit for hydrotreating the feedstock used in the present invention may be of any structure, and a single or a plurality of reactors in combination may be used. Hydrogen may be additionally introduced into the spaces between a plurality of reactors. The hydrotreating unit may be provided with a gas-liquid separation system or a hydrogen sulfide removal system.

The reaction system of the hydrotreating unit is preferably a fixed bed system. Hydrogen may be supplied in counterflow or parallel flow with respect to the feedstock. When the hydrotreating unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrotreating comprises a hydrogenation active metal supported on a porous support. The porous support may be a porous inorganic oxide composed of mainly alumina. Examples of the inorganic oxide include alumina, titania, zirconia, boria, silica, and zeolite. In the present invention, the support is preferably composed of alumina and at least one type selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any percentage to other oxides on the basis of the porous support. However, the content of alumina is preferably 90 percent by mass or less, more preferably 60 percent by mass or less, more preferably 40 percent by mass or less, of the support mass. These conditions and the catalyst are not particularly restricted as long as the properties of the feedstock are satisfied.

Zeolite is a crystalline alumino silicate. Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, with so-called micro pores of 20 Å or smaller and also newly formed pores in the range of 20 to 100 Å. The hydrothermal treatment may be carried out under known conditions.

The active metal of the catalyst used for hydrotreating is at least one metal selected from the Group 6A metals of the periodic table, preferably at least one metal selected from Mo and W. The active metal may be a combination of the Group 6A metals and Group 8 metals, specifically a combination of Mo or W and Co or Ni, such as Co-Mo, Co-W, Ni-Mo, Ni-W, Co-Ni-Mo, and Co-Ni-W. The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the support. Alternatively, the metal(s) may be supported on the porous support in the form of a suitable oxide, complex oxide or zeolite produced at the intermediate stage of the preparation of the porous support and then may be subjected to gel-preparation or heat-concentration and kneading.

There is no particular restriction on the amount of the active metal(s) to be supported. However, the amount is from 0.1 to 10 percent by mass, preferably from 0.15 to 5 percent by mass, more preferably from 0.2 to 3 percent by mass on the basis of the catalyst mass.

The catalyst is preferably used after it is subjected to a pre-reduction treatment under a hydrogen stream. In general, the active metal (s) are subjected to heat at 200°C or higher in accordance with the predetermined procedures, circulating a gas containing hydrogen and then reduced, thereby exerting catalytic activity.

The gas oil composition produced in the present invention necessarily has a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less.

The sulfur content of the gas oil compositions of the present invention is necessarily 10 ppm by mass or less, preferably 5 ppm by mass or less, more preferably 3 ppm by mass or less, more preferably 1 ppm by mass or less with the objective of reducing poisonous substances exhausted from an engine and improving exhaust-gas post-processing system performances. The sulfur content used herein denotes the mass content of the sulfur components on the basis of the total mass of a gas oil composition measured in accordance with JIS K 2541 "Crude oil and petroleum products-Determination of sulfur content".

The oxygen content of the gas oil compositions of the present invention is necessarily 0.8 percent by mass or less, preferably 0.6 percent by mass or less, more preferably 0.4 percent by mass or less, more preferably 0.2 percent by mass or less, with the objective of improving oxidation stability. The oxygen content can be measured with a conventional elemental analysis device. For example, the oxygen content is measured by converting a sample on platinum carbon to CO or further to CO₂ and measuring the amount thereof using a thermal conductivity detector.

The flash point of the gas oil compositions of the present invention is preferably 45°C or higher. If the flash point is lower than 45°C, the composition can not be handled as a gas oil composition for safety reasons. For the same reasons, the flash point is preferably 54°C or higher, more preferably 58°C or higher. The flash point referred herein denotes the value measured in accordance with JIS K 2265 "Crude oil and petroleum products-Determination of flash point".

The cetane index of the gas oil compositions of the present invention is preferably 45 or greater. If the cetane index is lower than 45, it is likely that the concentrations of PM, aldehydes, and NOx in the exhaust gas would be increased. For the same reasons, the cetane index is preferably 48 or greater, more preferably 51 or greater. The cetane index used herein denotes the value calculated in accordance with "8.4 cetane index calculation method using variables equation" prescribed in JIS K 2280 "Petroleum products-Fuels-Determination of octane number, cetane number and calculation of cetane index". The cetane index defined by the JIS standards is generally applied to gas oil containing no cetane number improver. However, in the present invention, "8.4 cetane index calculation method using variables equation" is applied to a gas oil containing a cetane number improver, and the value obtained thereby is also defined as cetane index.

The cetane number of the gas oil compositions of the present invention is preferably 52 or greater, more preferably 54 or greater, more preferably 55 or greater. If the cetane number is lower than 52, it is likely that the concentrations of NOx, PM and aldehydes would be increased. There is no particular restriction on the lower limit of the cetane number. However, with the objective of reducing black smoke in the exhaust gas, the cetane number is preferably 90 or lower, more preferably 88 or lower, more preferably 85 or lower. The gas oil compositions of the present invention can be increased in cetane number by adding thereto an adequate amount of a cetane number improver, if necessary. The cetane number used herein denotes the cetane number measured in accordance with "7. Cetane number test method" prescribed in JIS K 2280 "Petroleum products-Fuels-Determination of octane number, cetane number and calculation of cetane index".

The density at 15°C of the gas oil compositions of the present invention is preferably 750 kg/cm³ or higher, more preferably 760 kg/cm³ or higher, more preferably 770 kg/cm³ or higher with the objective of retaining the calorific value. The density is preferably 850 kg/cm³ or lower, more preferably 845 kg/cm³ or lower, more preferably 840 kg/cm³ or lower with the objective of reducing NOx and PM emissions. The density referred herein denotes the density measured in accordance with JIS K 2249 "Crude petroleum and petroleum products-Determination of density and petroleum measurement tables based on a reference temperature (15°C)".

The gas oil compositions of the present invention have necessarily such a lubricating performance that the HFRR wear scar diameter (WS1.4) is preferably 410 µm or smaller, more preferably 400 µm or smaller. If the HFRR wear scar diameter (WS1.4) is greater than 410 µm, the composition would cause a diesel engine equipped with a distribution type injection pump in particular to be increased in driving torque and in wear on each part of the pump while the engine is driven, possibly leading not only to degradation of the exhaust gas properties but also to the breakdown of the engine itself. Also in an electronically controlled fuel injection pump enabling a high pressure injection, wear on the sliding parts would likely occur.

The HFRR wear scar diameter (WS1.4) referred herein denotes the lubricity measured in accordance with JPI-5S-50-98 "Gas oil -Testing Method for Lubricity" prescribed in JPI Standard and Manuals Testing Method for Petroleum Products published by Japan Petroleum Inst.

The aromatic content of the gas oil compositions of the present invention is preferably 20 percent by volume or less, more preferably 19 percent by volume or less, more preferably 18 percent by volume or less with the objective of enhancing the environment load reducing effects and reducing NOx and PM. The aromatic content used herein denotes the volume percentage (volume %) of the aromatic component content measured in accordance with JPI-5S-49-97 "Petroleum Products-Determination of Hydrocarbon Types-High Performance Liquid Chromatography" prescribed in JPI Standard and Manuals Testing Method for Petroleum Products published by Japan Petroleum Inst.

The water content of the gas oil composition of the present invention is necessarily 300 ppm by volume or less, preferably 250 ppm by volume or less, more preferably 200 ppm by volume or less with the objective of suppressing adverse affects on parts such as a fuel tank or hydrolysis of ester compounds. The water content referred herein denotes the water content defined by JIS K 2275 "Crude oil and petroleum products-Determination of water content".

With regard to the distillation characteristics of the gas oil compositions of the present invention, the 95% distillation temperature is preferably 360°C or lower, more preferably 340°C or lower, more preferably 330°C or lower, particularly preferably 320°C or lower. If the 95% distillation temperature exceeds the upper limit, the emissions of PM and fine particles would increase. The 95% distillation temperature is preferably 280°C or higher, more preferably 285°C or higher, more preferably 290°C or higher, more preferably 295°C or higher. If the 95% distillation temperature is lower than the lower limit, the resulting composition would fail to attain a sufficient fuel consumption improving effect, resulting in the tendency that the engine output is reduced. The 95% distillation temperature referred herein denotes the values measured in accordance with JIS K 2254 "Petroleum products-Determination of distillation characteristics".

The evaporation fraction at 300 °C E300of the gas oil compositions of the present invention is 40 percent by volume or more, more preferably 45 percent by volume or more, more preferably 50 percent by volume or more in view of an increase in the unburnt hydrocarbon amount in the exhaust gas. The E300 referred herein denotes the value measured in accordance with JIS K 2254 "Petroleum products-Determination of distillation characteristics".

There is no particular restriction on the kinematic viscosity at 30°C of the gas oil compositions of the present invention. However, the kinematic viscosity at 30°C is preferably 2.5 mm²/s or greater, more preferably 2.7 mm²/s or greater, 2.9 mm²/s or greater. If the kinematic viscosity is lower than 2.5 mm²/s, it would be difficult to control the fuel injection timing at t-he fuel injection pump side, and lubricity at each part of the fuel injection pump installed in an engine would be reduced. The kinematic viscosity at 30°C is preferably 5 mm²/s or lower, more preferably 4.7 mm²/s or lower, more preferably 4.5 mm²/s or lower. If the kinematic viscosity exceeds 5 mm²/s, the fuel injection system is destabilized due to an increase in resistance therein and thus the NOx and PM concentrations in the exhaust gas are increased. The kinematic viscosity referred herein denotes the value measured in accordance with JIS K 2283 "Crude petroleum and petroleum products-Determination of kinematic viscosity and calculation of viscosity index from kinematic viscosity".

The carbon residue of the 10% distillation residue of the gas oil compositions of the present invention is necessarily 0.1 percent by mass or less, more preferably 0.08 percent by mass or less, more preferably 0.06 percent by mass or less with the objective of reducing fine particles and PM and retaining the performances of the exhaust-gas post-processing system installed in an engine. The carbon residue of the 10% distillation residue referred herein denotes that measured in accordance with JIS K 2270 "Crude petroleum and petroleum products-Determination of carbon residue".

The acid number of the gas oil compositions of the present invention is preferably 0.13 mgKOH/g or less in view of storage stability and adverse affects on engine parts. The acid number indicates the free fatty acid amount in a mixture. If the acid number is larger, engine parts would be adversely affected by acid compounds. Therefore, the acid number is preferably 0.12 mgKOH/g or less, more preferably 0.10 mgKOH/g or less, more preferably 0.08 mgKOH/g or less, particularly preferably 0.05 mgKOH/g or less. The acid number referred herein denotes the total acid number measured in accordance with JIS K 2501 "Petroleum products and lubricants-Determination of neutralized number".

The fatty acid alkyl ester content of the gas oil compositions of the present invention is necessarily 3.5 percent by mass or less, preferably 2.0 percent by mass or less, more preferably 1.0 percent by mass or less, more preferably 0.5 percent by mass or less with the objective of preventing the deterioration of burnout properties of the composition upon combustion in an engine. The fatty acid alkyl ester content referred herein denotes that measured in accordance with EN 14103.

The methanol content of the gas oil compositions of the present invention is necessarily 0.01 percent by mass or less, preferably 0.008 percent by mass or less, more preferably 0.006 percent by mass or less, more preferably 0.005 percent by mass or less with the objective of preventing adverse affects on a fuel injection system. The methanol content referred herein denotes that measured in accordance with JIS K 2536 and EN 14110.

The glyceride content of the gas oil compositions of the present invention is necessarily 0.01 percent by mass or less, preferably 0.008 percent by mass or less, more preferably 0.006 percent by mass or less, more preferably 0.005 percent by mass or less with the objective of preventing adverse affects on a fuel injection system. The glyceride content referred herein denotes that measured in accordance with EN 14105.

The cold filter plugging point (CFPP) of the gas oil compositions of the present invention is preferably -5°C or lower, more preferably -6°C or lower, more preferably -7°C or lower with the objective of preventing of plugging of the pre-filter of a diesel powered automobile. The cold filter plugging point used herein denotes the cold filter plugging point measured -in accordance with JIS K 2288 "Gas oil-Determination of cold filter plugging point".

The pour point of the gas oil compositions of the present invention is preferably -7.5°C or lower, more preferably -10°C or lower, with the objective of securing low-temperature startability or drivability and retaining the injection performance of an electronically controlled fuel injection pump. The pour point referred herein denotes the pour point measured in accordance with JIS K 2269 "Testing Method for Pour Point and Cloud Point of Crude Oil and Petroleum Products".

For the gas oil compositions of the present invention, the ratio of the isoparaffin having two or more branches in the paraffin is preferably 0.05 or greater and 0.25 or less, more preferably from 0.07 to 0.22, more preferably from 0.10 to 0.20. If the ratio of the isoparaffin having two or more branches in the paraffin is less than 0.05, the volumetric fuel consumption and exhaust gas would be poor. If the ratio is greater than 0.25, the ignitability of the composition would be poor.

For the gas oil compositions of the present invention, the ratio of the isoparaffin to the normal paraffin is preferably 0.60 or greater, more preferably 0.70 or greater, more preferably 0.80 or greater. If the ratio is less than 0.60, the volumetric fuel consumption and exhaust gas would be poor.

The paraffin (chain saturated hydrocarbon) referred herein can be obtained using GC-TOFMS. In GC-TOFMS, a sample is subjected to gas chromatography to separate its constituents, each of which is then ionized. The ions are then mass-separated by making use of the fact that the flight speed differs according to the ion mass when a given acceleration voltage is applied to ions, and a mass spectrum is obtained according to differences in arrival time at the ion detector. The ionization method in GC-TOFMS is preferably FI ionization method because the formation of fragmented ions is suppressed and accuracy in measurement of isoparaffins can be improved. The measuring devices and conditions used in the present invention are as follows:
(GC section)
Device: HP6890 Series GC System & Injector manufacture by HEWLETT PACKARD DEVLOPMENT COMPANY, L.P.
Column: A glient HP-5 (30 m x 0.32 mmΦ, 0.25 µm-film)
Carrier Gas: He, 1.4 mL/minute (constant flow)
Inlet Temperature: 320°C
Injection Mode: split (split ratio = 1:100)
Oven Temperature: 50°C kept for 5 minutes,
increased by 5°C/minute, 320°C kept for 6 minutes
Injection Volume: 1 µL
(TOFMS section)
Device: JMS-T100GC manufactured by JEOL Ltd.
Counter Electrode Voltage: 10.0 kV
Ionization Method: FI + (Field Ionization)
GC Interface Temperature: 250°C
Measured Mass Range: 35 to 500

If necessary, the gas oil compositions of the present invention may be blended with a cetane number improver in a suitable amount so as to enhance the cetane number.

The cetane number improver may be any of various compounds known as a cetane number improver for gas oil. Examples of such a cetane number improver include nitrate esters and organic peroxides. These cetane number improvers may be used alone or in combination.

Preferred for use in the present invention are nitrate esters. Examples of the nitrate esters include various nitrates such as 2-chloroethyl nitrate, 2-ethoxyethyl nitrate, isopropyl nitrate, butyl nitrate, primary amyl nitrate, secondary amyl nitrate, isoamyl nitrate, primary hexyl nitrate, secondary hexyl nitrate, n-heptyl nitrate, n-octyl nitrate, 2-ethylhexyl nitrate, cyclohexyl nitrate, and ethylene glycol dinitrate. Particularly preferred are alkyl nitrates having 6 to 8 carbon atoms.

The content of the cetane number improver is preferably 500 ppm by mass or more, more preferably 600 ppm by mass or more, more preferably 700 ppm by mass or more, more preferably 800 ppm by mass or more, most preferably 900 ppm by mass or more on the basis of the total mass of each of the gas oil compositions. If the content of the cetane number improver is less than 500 ppm by mass, the cetane number improving effect may not be attained sufficiently, leading to the tendency that PM, aldehydes, and NOx in the exhaust gas from a diesel engine are not reduced sufficiently. There is no particular restriction on the upper limit content of the cetane number improver. However, the upper limit is preferably 1400 ppm by mass or less, more preferably 1250 ppm by mass or less, more preferably 1100 ppm by mass or less, most preferably 1000 ppm by mass or less, on the basis of the total mass of each of the gas oil compositions.

The cetane number improver may be any of those synthesized in accordance with conventional methods or commercially available products. Such products in the name of cetane number improver are available in a state wherein the effective component contributing to an improvement in cetane number (i.e., cetane number improver itself) is diluted with a suitable solvent. In the case where the gas oil compositions of the present invention are prepared using any of such commercially available products, the content of the effective component is preferably within the above-described range.

In addition to the cetane number improver, the gas oil compositions may be blended with other additives, particularly preferably with a lubricity improver and/or a detergent.

The lubricity improver may be any one or more types selected from carboxylic acid-, ester-, alcohol- and phenol-based lubricity improvers. Among these lubricity improvers, preferred are carboxylic acid- and ester-based lubricity improvers.

The carboxylic acid-based lubricity improver may be linoleic acid, oleic acid, salicylic acid, palmitic acid, myristic acid or hexadecenoic acid or a mixture of two or more of these carboxylic acids. Examples of the ester-based lubricity improver include carboxylic acid esters of glycerin. The carboxylic acid forming the carboxylic acid ester may be of one or more types. Specific examples of the carboxylic acid include linoleic acid, oleic acid, salicylic acid, palmitic acid, myristic acid or hexadecenoic acid.

There is no particular restriction on the amount of the lubricity improver to be blended if the HFRR wear scar diameter (WS1.4) is within the above-described preferred range. However, the amount is preferably 35 ppm by mass or more, more preferably 50 ppm by mass or more on the basis of the total mass of each of the compositions. When the lubricity improver is blended in an amount within these ranges, it can effectively perform its efficacy thereof. For example, in a diesel engine equipped with a distribution type injection pump, the lubricity improver can suppress the driving torque from increasing and can reduce wear on each part of the pump while the engine is driven. The upper limit amount is preferably 150 ppm by mass or less, more preferably 105 ppm by mass or less because its effect as balanced with the amount is not obtained.

Examples of the detergents include ashless dispersants, for example, imide compounds; alkenyl succinimides such as polybutenyl succinimide synthesized from polybutenyl succinic anhydrate and ethylene polyamines; succinic acid esters such as polybutenyl succinic acid ester synthesized from polyhydric alcohols such as pentaerythritol and polybutenyl succinic anhydrate; copolymerized polymers such as copolymers of dialkylaminoethyl methacrylates, polyethylene glycol methacrylates, or vinylpyrrolidon and alkylmethacrylates; and reaction products of carboxylic acids and amines. Among these, preferred are alkenyl succinimides and reaction products of carboxylic acids and amines. These detergents may be used alone or in combination.

When an alkenyl succinimide is used, an alkenyl succinimide having a molecular weight of 1000 to 3000 may be used alone, or an alkenyl succinimide having a molecular weight of 700 to 2000 and an alkenyl succinimide having a molecular weight of 10000 to 20000 may be used in combination.

Carboxylic acids constituting reaction products of carboxylic acids and amines may be of one or more types. Specific examples of the carboxylic acids include fatty acids having 12 to 24 carbon atoms and aromatic carboxylic acids having 7 to 24 carbon atoms. Examples of fatty acids having 12 to 24 carbon atoms include, but not limited thereto, linoleic acid, oleic acid, palmitic acid, and myristic acid. Examples of aromatic carboxylic acids having 7 to 24 carbon atoms include, but not limited thereto, benzoic acid and salicylic acid. Amines constituting reaction products of carboxylic acids and amines may be of one or more types. Typical examples of amines used herein include, but not limited thereto, oleic amines. Various amines may also be used.

There is no particular restriction on the amount of the detergent to be blended. However, the amount is preferably 30 ppm by mass or more, more preferably 60 ppm by mass or more, more preferably 80 ppm by mass or more, on the basis of the total mass of each of the compositions, because the detergent can perform its effect to suppress a fuel injection nozzle from plugging. The effect may not be obtained if the amount is less than 30 ppm by mass. On the other hand, if the detergent is blended in a too much amount, its effect as balanced with the amount is not obtained. Therefore, the amount of the detergent is preferably 300 ppm by mass or less, more preferably 180 ppm by mass or less because the detergent may increase the amounts of NOx, PM and aldehydes in the exhaust gas from a diesel engine.

Like the above-described cetane number improver, products in the name of lubricity improver or detergent are available in a state wherein the effective component contributing to an improvement in lubricity or to detergency is diluted with a suitable solvent. In the case where such products are blended with the gas oil compositions of the present invention, the content of the effective component is preferably within the above-described range.

In order to further enhance the properties of the gas oil compositions of the present invention, other known fuel oil additives (hereinafter referred to as "other additives" for convenience) may be used alone or in combination. Examples of other additives include cold flow improvers such as ethylene- vinyl acetate copolymers and alkenylsuccinic amides; phenol- and amine-based anti-oxidants; metal deactivators such as salicyliden derivatives; anti-icing agents such as polyglycol ethers; anti-corrosion agents such as aliphatic amines and alkenyl succinic acid esters; anti-static additives such as anionic, cationic, and amphoteric surface active agents; coloring agents such as azo dye; and silicone-based defoaming agents.

The amounts of other additives may be arbitrarily selected. However, the amount of each of other additives is preferably 0.5 percent by mass or less, more preferably 0.2 percent by mass or less, on the basis of the total mass of each of the compositions.

The gas oil compositions of the present invention comprising an environment friendly base gas oil produced from a triglyceride-containing hydrocarbon that is an animal or vegetable fat and/or a component originating therefrom are excellent all in life cycle CO₂ emission properties, ignitability and high-temperature restartability.

### [Applicability in the Industry]

The gas oil compositions of the present invention contain an environment friendly base gas oil produced from an animal or vegetable fat and/or a component originating therefrom and thus have excellent life cycle CO₂ emission properties, ignitability, oxidation stability and low-temperature fluidity and the capability of reducing aldehydes in the exhaust gas, all of which were difficult to achieve with the conventional gas oil compositions.

### [Examples]

Hereinafter, the present invention will be described in more details by way of the following examples and comparative examples, which should not be construed as limiting the scope of the invention.

Properties of fuels were determined by the following methods.

The density referred herein denotes that measured in accordance with JIS K 2249 "Crude petroleum and petroleum products-Determination of density and petroleum measurement tables based on a reference temperature (15°C)".

The kinematic viscosity referred herein denotes that measured in accordance with JIS K 2283 "Crude petroleum and petroleum products-Determination of kinematic viscosity and calculation of viscosity index from kinematic viscosity".

The sulfur content referred herein denotes the mass content of the sulfur components on the basis of the total mass of the composition, measured in accordance with JIS K 2541 "Crude oil and petroleum products-Determination of sulfur content".

The oxygen content referred herein was measured by an elemental analysis method.

All of the distillation characteristics referred herein are values measured in accordance with JIS K 2254 "Petroleum products-Determination of distillation characteristics".

The aromatic content referred herein denotes the volume percentage (volume %) of the aromatic component content measured in accordance with JPI-5S-49-97 "Petroleum Products-Determination of Hydrocarbon Types-High Performance Liquid Chromatography" prescribed in JPI Standard and Manuals Testing Method for Petroleum Products published by Japan Petroleum Inst.

The water content referred herein denotes that measured in accordance with JIS K 2275 "Crude oil and petroleum products-Determination of water content-Potentiometric Karl Fischer titration method".

The flash point referred herein denotes the value measured in accordance with JIS K 2265 "Crude oil and petroleum products-Determination of flash point".

The acid number referred herein denotes the total acid number measured in accordance with JIS K 2501 "Petroleum products and lubricants-Determination of neutralized number".

The cetane index referred herein denotes the value calculated in accordance with "8.4 cetane number calculation method using variables equation" prescribed in JIS K 2280 "Petroleum products-Fuels-Determination of octane number, cetane number and calculation of cetane number". The cetane index defined by the JIS standards is not generally applied to gas oil containing a cetane number improver. However, in the present invention, "8.4 cetane number calculation method using variables equation" is applied to a gas oil containing a cetane number improver, and the value obtained thereby is also defined as cetane index.

The cetane number referred herein denotes that measured in accordance with "7. Cetane number test method" prescribed in JIS K 2280 "Petroleum products-Fuels-Determination of octane number, cetane number and calculation of cetane index".

### [Examples 1 and 2, and Comparative Examples 1 to 3]

A vegetable fat having the properties set forth in Table 1 was reacted under the reaction conditions set forth in Table 2 so as to produce an environment friendly base gas oil set forth in Table 3.

The properties of a fatty acid methyl ester produced by esterifying the vegetable fat set forth in Table 1 are also set forth in Table 3. This fatty acid methyl ester is a methyl ester compound produced by reacting the vegetable fat with methanol. An ester exchange reaction was used wherein an ester compound is produced by reacting the vegetable fat directly with an alkyl alcohol, stirring at a temperature of 70°C for one hour in the presence of an alkyl catalyst (sodium methylate).

The environment friendly base gas oil, methyl-esterified product of the vegetable fat, and hydrorefined oil which is a petroleum base oil set forth in Table 3 were blended to produce gas oil compositions (Examples 1 and 2, and Comparative Examples 1 to 3).

Table 4 also shows the blend ratio in each of the gas oil compositions, and the density at 15°C, kinematic viscosity at 30°C, flash point, sulfur content, oxygen content, distillation characteristics, aromatic content, cetane number, cetane index, carbon residue content of the 10% distillation residue, water content, and acid number, of each of the gas oil compositions.

As set forth in Table 4, the gas oil compositions used in the examples and comparative examples were produced by blending the environment friendly base gas oil, methyl-esterified product of the vegetable fat, and hydrorefined oil which is a petroleum base oil in specific ratios.

As apparent from Table 4, Examples 1 and 2 wherein the environment friendly base gas oil and mixtures thereof with the hydrorefined oil were used and blended in amounts within the range defined by the present invention enabled the easy and certain production of gas oil compositions with a sulfur content of 10 ppm by mass or less, an oxygen content of 1 ppm by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less. Whereas, Comparative Examples 1 to 3 wherein the gas oil compositions were produced without using the specific environment friendly base gas oil failed to produce the compositions intended by the present invention.

The following various tests were carried out using the gas oil compositions of Examples 1 and 2 and Comparative Examples 1 to 3. All of the test results are set forth in Table 5. It is apparent from the results set forth in Table 5 that the gas oil compositions of Examples 1 and 2 were less in life cycle carbon dioxide and aldehydes emissions and more excellent in ignitability and oxidation stability, compared with the gas oil compositions of Comparative Examples 1 to 3.

### (Vehicle Exhaust Gas Test)

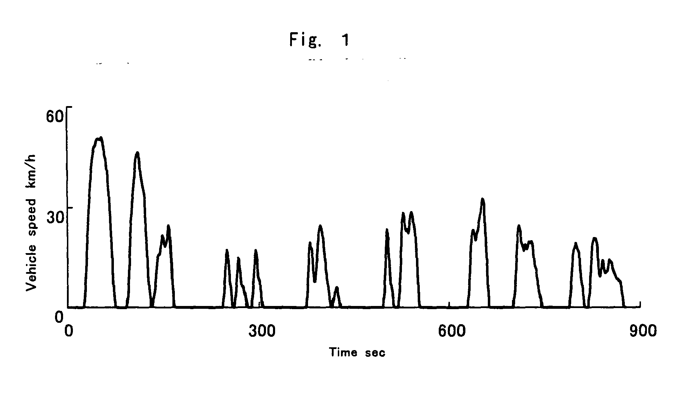

The THC and aldehydes emissions from the following automobile equipped with a diesel powered engine (-Vehicle 1) were measured using each of the gas oil compositions. The aldehydes were captured and analyzed with a DPNH cartridge. The test was carried out under the transient driving mode simulating actual running, shown in Fig. 1. The amount of each of the exhaust gas components was calculated as the amount per 1 km running under the test mode. Each of the results was then quantified by comparing it with the result of Comparative Example 1, which result was defined as 100.

### (Vehicle Specifications): Vehicle 1

- Type of engine:: in-line 4 cylinder diesel engine with an intercooled supercharger
- Displacement:: 3 L
- Compression ratio:: 18.5
- Maximum power:: 125 kW/3400 rpm
- Maximum torque:: 350 Nm/2400 rpm
- Adopted regulation:: 1997 Exhaust Gas Emission Regulation
- Vehicle weight:: 1900 kg
- Transmission:: 4-speed automatic transmission
- Exhaust-gas post-processing system:: oxidation catalyst

### (Calculation of life cycle CO₂)

Life cycle CO₂ was calculated separately as the CO₂ emitted as a result of combustion of the gas oil compositions in a vehicle equipped with a diesel-powered engine and as the CO₂ generated from oil-well drilling to pumping to a vehicle fuel tank.

The CO₂ emitted by combustion (hereinafter referred to as "Tank to Wheel CO₂" was calculated as the emissions per unit calorific value of each gas oil composition on the basis of CO₂ emissions, driving fuel efficiency, and fuel density when the above vehicle test was carried out.

The CO₂ generated from oil-well drilling to pumping to a vehicle fuel tank (hereinafter referred to as "Well to Tank CO₂") was calculated as the total CO₂ emissions during a sequence starting from the drilling of material and crude oil resources, through transportation, processing, and delivery, to pumping to a vehicle's gas tank. For calculation of "Well to Tank CO₂", the calculation was carried out in consideration of the carbon dioxide generated during the following (1B) to (5B) events. Data required for the calculation was the oil refinery operation performance date possessed by the inventors of the present invention.
(1B) Carbon dioxide emissions accompanied with the use of fuel for various processing devices and facilities such as boilers
(2B) Carbon dioxide emissions accompanied with reforming reaction in a hydrogen producing device in a processing using hydrogen
(3B) Carbon dioxide emissions accompanied with regeneration of a catalyst if the processing is carried out through a device such as a catalytic cracking device requiring continuous catalyst regeneration (4B) Carbon dioxide emissions when a gas oil composition was produced or shipped at Yokohama, Japan, delivered therefrom to Sendai, Japan, and pumped into a vehicle there
(5B) Carbon dioxide emissions when an animal or vegetable fat and a component originating therefrom were obtained from Malaysia or regions therearound, and a gas oil composition was produced in Yokohama, Japan

If an animal or vegetable fat and a component originating therefrom is used as fuel, a rule established in Kyoto Protocol that the carbon dioxide emissions resulting from combustion of such fuel is not counted is applied. This rule was thus applied to the above-described "Tank to Wheel CO₂" calculation.

Tables 5 shows the "Tank to Wheel CO₂" and "Well to Tank CO₂" emissions as calculated above as well as the total of these emissions, i.e., life cycle CO₂ emissions (LC). Each of the results is quantified by comparing it with the results of Comparative Example 1, the results of which was defined as 100.

### (Oxidation stability test)

The fuels were acceleratingly deteriorated at a temperature of 115°C under oxygen bubbling for 16 hours. The acid number of the fuels was measured before and after the test. The acid number referred herein denotes the total acid number measured in accordance with JIS K 2501 "Petroleum products and lubricants-Determination of neutralized number".

### (Examples 3 and 4, and Comparative Examples 4 to 6)

A vegetable fat having the properties set forth in Table 1 was reacted under the reaction conditions set forth in Table 6 so as to produce environment friendly base gas oils set forth in Table 7.

The properties of a fatty acid methyl ester produced by esterifying the vegetable fat set forth in Table 1 are also set forth in Table 7. This fatty acid methyl ester is a methyl ester compound produced by reacting the vegetable fat with methanol. An ester exchange reaction was used wherein an ester compound is produced by reacting the vegetable fat directly with an alkyl alcohol, stirring at a temperature of 70°C for one hour in the presence of an alkyl catalyst(sodium methylate).

The environment friendly base gas oil, methyl-esterified product of the vegetable fat, and hydrorefined oils 2 and 3 which are petroleum base oils set forth in Table 7 were blended to produce gas oil compositions (Examples 3 and 4, and Comparative Examples 4 to 6).

Table 8 shows the blend ratio in each of the gas oil compositions, and the density at 15°C, kinematic viscosity at 30°C, flash point, sulfur content, oxygen content, distillation characteristics, aromatic content, cetane number, cetane index, carbon residue content of the 10% distillation residue, water content, and acid number after an oxidation stability test, of each of the gas oil compositions.

As set forth in Table 8, the gas oil compositions used in the examples and comparative examples were produced by blending the environment friendly base gas oils, methyl-esterified product of the vegetable fat, and hydrorefined oils which are petroleum base oils in specific ratios.

As apparent from Table 8, Examples 3 and 4 wherein the environment friendly base gas oils and a mixture thereof with the hydrorefined oil were used and blended in amounts within the range defined by the present invention enabled the easy and certain production of gas oil compositions with a sulfur content of 10 ppm by mass or less, an oxygen content of 1 ppm by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less. Whereas, Comparative Examples 4 to 6 wherein the gas oil compositions were produced without using the specific environment friendly base gas oil failed to produce the compositions intended by the present invention.

The following various tests were carried out using the gas oil compositions of Examples 3 and 4 and Comparative Examples 4 to 6. All of the test results are set forth in Table 9. It is apparent from the results set forth in Table 9 that the gas oil compositions of Examples 3 and 4 were less in life cycle carbon dioxide emissions, more excellent in fuel consumption, low-temperature startability and oxidation stability and gave less adverse affect on materials.

### (Low-temperature startability)

Using Vehicle 2, the gas oil compositions of all the examples and comparative examples were subjected to a test for evaluating their low temperature startability. First of all, on a chassis dynamometer capable of controlling the environment temperature, the test was carried out at room temperature by (1) flashing (washing) the fuel system of a test diesel vehicle with a fuel to be evaluated; (2) draining out the flashing fuel; (3) replacing the main filter with new one; and (4) feeding the fuel tank with the fuel to be evaluated in a specific amount (1/2 of the tank volume of the test vehicle). The test was continued by (5) cooling rapidly the environment temperature from room temperature to 5°C; (6) keeping the temperature at 5°C for one hour; (7) cooling gradually at a rate of 1°C/h till reaching to the predetermined temperature (-7°C); and (8) starting the engine after the temperature was kept at the predetermined temperature for one hour. If the engine did not start even after 10 second cranking was repeated twice at an interval of 30 seconds, the fuel was evaluated as "poor". If the engine started while 10 second cranking was repeated twice at an interval of 30 seconds, the fuel was evaluated as "good".

### (Vehicle Specifications): Vehicle 2

- Type of engine:: in-line 4 cylinder diesel engine with an intercooled supercharger
- Displacement:: 3 L
- Fuel injection system:: common rail system
- Adopted regulation:: Long-Term Emission Regulation
- Exhaust-gas post-processing system:: oxidation catalyst

**Table 1**

| | | Vegetable fat 1 |
|---|---|---|
| Density (15°C) | kg/m³ | 916 |
| Kinematic viscosity (100°C) | mm²/s | - |
| C mass% | | 77.3 |
| H mass% | | 12.0 |
| Nitrogen content | mass ppm | 10.6 |
| Sulfer content | mass% | <1 |
| Total acid number | mgKOH/g | 0.07 |
| Ratio of fatty acid groups in fat mass% | Butyric acid group | 0 |
| | Caproic acid group 0 | |
| | Caprylic acid group | 0 |
| | Capric acid group | 0 |
| | Lauric acid group | 0 |
| | Myristic acid group | 1 |
| | Palmitic acid group | 44 |
| | Stearic acid group | 5 |
| | Oleic acid group | 39 |
| | Linoleic acid group | 10 |
| | Linolenic acid group | 0 |

**Table 2**

| HDO catalyst | | Ni/Mo-alumina |
|---|---|---|
| Reaction temperature | °C | 280 |
| Hydrogen partial pressure | MPa | 11 |
| LHSV | h⁻¹ | 0.5 |
| Hydrogen/oil ratio | NL/L | 510 |

**Table 3**

| | | HDO treated vegetable fat 1 | Methylesterified product of vegetable fat 1 | Hydrorefined oil |
|---|---|---|---|---|
| Density | (15°C) kg/m | 783 | 874 | 821 |
| Kinematic viscosity | (30°C) mm²/s | 4.1 | 5.5 | 3.6 |
| Flash point | °C | 116.0 | 181.0 | 72.0 |
| Sulfer content | mass ppm | <1 | <1 | 4 |
| Oxygen content | mass% | <0.1 | 11.8 | <0.1 |
| Distillation characteristics °C | 10% Distillation temperature | 285.0 | - | 188.5 |
| | 50% Distillation temperature | 290.5 | - | 268.5 |
| | 90% Distillation temperature | 301.0 | - | 333.0 |
| Aromatic content vol. % | Total aromatic content | <1 | - | 17.7 |
| | Content of Mono-aromatic Hydrocarbons | <1 | - | 16.2 |
| Cetane number | | 78 | 62 | 57 |
| Isoparaffin/normal paraffin | | 0.00 | 0.00 | 1.20 |
| Total acid number | mgKOH/g | 0.01 | 0.15 | 0.01 |

**Table 4**

| | | Examples | | Comparative Examples | | |
|---|---|---|---|---|---|---|
| | | 1 | 2 | 1 | 2 | 3 |
| Hydrorefined oil | | | 80 | 100 | | 80 |
| HDO treated vegetable fat 1 | | 100 | 20 | | | |
| Methyl-esterified product of vegetable fat 1 | | | | | 100 | 20 |
| Density (15°C) | kg/m³ | 783 | 813 | 821 | 874 | 832 |
| Kinematic viscosity (30°C) | mm²/s | 4.1 | 3.8 | 3.6 | 5.5 | 3.9 |
| Flash point | °C | 116 | 77 | 72 | 181 | 73 |
| Sulfer content | mass ppm | <1 | 3 | 4 | <1 | 3 |
| Oxygen content | mass % | <0.1 | <0.1 | <0.1 | 11.9 | 2.4 |
| Distillation characteristics °C | 10% Distillation temperature | 285.0 | 193.0 | 188.5 | - | 194.0 |
| | 50% Distillation temperature | 290.5 | 271.0 | 268.5 | - | - 289.0 |
| | 90% Distillation temperature | 301.0 | 319.0 | 333.0 | - | - 336.0 |
| | 95% Distillation temperature | 304.0 | 338.5 | 350.0 | - | 344.5 |
| E300 distillation volume | vol. % | 87.2 | 74.2 | 69.5 | - | 57.4 |
| Aromatic content vol. % | Total aromatic content | <1 | 14.1 | 17.7 | - 14.2 | |
| | Content of Mono-aromatic Hydrocarbons | <1 | 12.9 | 16.2 | - | 13.0 |
| Cetane number | | 80 | +2 | 57 | 62 | 58 |
| Cetane index | | 98 | 62 | 57 | - | 57 |
| Carbon residue content of 10% distillation residue | mass % | - | 0.02 | 0.02 | 0.03 | 0.02 |
| Water content | mass ppm | 31 | 35 | 35 | 78 | 46 |
| Isoparaffin/normal paraffin | | 0.00 | 0.96 | 1.20 | 0.00 | 0.96 |
| Total acid number increase | mgKOH/g | 0.01 | 0.01 | 0.00 | 1.27 | 0.22 |

**Table 5**

| | | Examples | | Comparative Examples | | |
|---|---|---|---|---|---|---|
| | | 1 | 2 | 1 | 2 | 3 |
| CO₂ emissions | Well to Wheel gCO2/MJ | 45.4 | 64.2 | 78.1 | 20.5 | 66.6 |
| | Relative value | 58 | 82 | 100 | 26 | 85 |
| Oxidation stability test | Before accelerated deterioration mgKOH/g | 0.01 | 0.01 | 0.01 | 0.32 | 0.10 |
| | After accelerated deterioration mgKOH/g | 0.01 | 0.01 | 0.01 | 1.38 | 0.25 |
| THC | | 95 | 97 | 100 | 112 | 103 |
| Aldehyde emissions | | 95 | 98 | 100 | 162 | 118 |

**Table 6**

| Catalyst | First stage | Ni/Mo-alumina | Ni/Mo-alumina |
|---|---|---|---|
| | Second stage | Pt-Pd/ZSM-5 | |
| Reaction temperature | °C | 320 | 280 |
| Hydrogen pardal pressure | MPa | 6 | 11 |
| LHSV | h⁻¹ | 0.5 | 0.5 |
| Hydrogen/oil ratio | NL/L | 510 | 510 |

**Table 7**

| | | HDO treated vegetable fat 1 + isomerized oil | HDO treated vegetable fat 1 | Methylesterfied product of vegetable fat 1 | Hydrorefined oil 2 | Hydrorefined oil 3 |
|---|---|---|---|---|---|---|
| Density (15°C) | kg/m³ | 778 | 775 | 874 | 792 | 821 |
| Kinematic viscosity (30°C) | mm²/s | 3.5 | 4.1 | 5.1 | 1.3 | 3.6 |
| Flash point | °C | 91.0 | 116.0 | 181.0 | 41.0 | 72.0 |
| Sulfer content | mass ppm | <1 | <1 | <1 | 8 | 6 |
| Oxygen content | mass % | <0.1 | <0.1 | 11.9 | <0.1 | <0.1 |
| Pour point | °C | 0 | 20.0 | 12.5 | <-30 | -2.5 |
| Cold filter plugging point | °C | -1 | 20.0 | 16.0 | <-45 | -1.0 |
| Distillation characteristics °C | 10% Distillation temperature | 240.0 | 285.0 | 335.0 | 168.0 | 188.5 |
| | 50% Distillation temperature | 263.0 | 290.5 | 354.0 | 195.0 | 268.5 |
| | 90% Distillation temperature | 292.0 | 301.0 | 359.0 | 235.0 | 333.0 |
| | 95% Distillation temperature | 300.5 | 304.0 | - | 244.0 | 350.0 |
| Aromatic content vol. % | Total aromatic content | <1 | <1 | - | - 17.9 | 17.7 |
| | Content of Mono-aromatic Hydrocarbons | <1 | <1 | - | 17.0 | 16.2 |
| Cetane number | | 54 | 80 | 52 | 45 | 57 |
| Isoparaffin/normal paraffin | | 1.46 | 0.00 | 0.00 | 0.77 | 1.20 |
| Total acid number | mgKOH/g | 0.01 | 0.01 | 0.32 | 0.00 | 0.01 |

**Table 8**

| | | Examples | | Comparative Examples | | |
|---|---|---|---|---|---|---|
| | | 3 | 4 | 4 | 5 | 6 |
| Hydrorefined oil 2 | | 30 | 30 | 30 | 30 | 30 |
| Hydrorefined oil 3 | | | 20 | 70 | | |
| HDO treated vegetable fat 1+ Isomerized oil | | 70 | 50 | | | |
| HDO treated vegetable fat 1 | | | | | 70 | |
| Methyl-esterified product of vegetable fat | | 1 | | | | |
| Density (15°C) | kg/m³ | 781 | 809 | 811 | 777 | 819 |
| Kinematic viscosity (30°C) | mm²/s | 2.9 | 3.2 | 3.1 | 3.1 | 3.9 |
| Flash point | °C | 76 | 65 | 62 | 77 | 80 |
| Sulfer content | mass ppm | 3 | | 4 7 | 3 | 3 |
| Oxygen content | mass % | <1 | <1 | <1 | 11.9 | 2.4 |
| Cold filter plugging point | °C | -8 | -12 | -9 | 7 | 2 |
| Pour point | °C | -10.0 | -12.5 | -10.0 | 5.0 | 0.0 |
| Distillation characteristics °C | 10% Distillation temperature | 195.0 | 192.0 | 185.5 | 197.5 | 211.0 |
| | 50% Distillation temperature | 298.0 | 290.0 | 256.0 | 302.0 | 287.0 |
| | 90% Distillation temperature | 317.0 | 310.0 | 334.0 | 318.5 | 340.5 |
| Aromatic content vol. % | Total aromatic content | 5.4 | 9.0 | 17.7 | 5.4 | 5.4 |
| | Content of Mono-aromatic Hydrocarbons | 5.1 | 8.5 | 18.2 | 5.1 | 5.1 |
| Cetane number | | 53 | 56 | 57 | 55 | 58 |
| Cetane index | | 91 | 69 | 58 | 96 | 64 |
| Carbon residue content of 10% distillation residue | mass % | 0.01 | 0.01 | 0.01 | 0.01 | 0.04 |
| Water content | mass ppm | 33 | 39 | 35 | 41 | 79 |
| Fatty acid methyl ester content | mass % | 0 | 0 | 0 | 0.0 | 69.6 |
| Methanol content | mass % | 0 | 0 | 0 | 0 | 0 |
| Glyceride content | mass % | 0 | 0 | 0 | 0 | 0 |
| Isoparaffin/normal paraffin | | 1.28 | 1.20 | 1.07 | 0.23 | 0.77 |
| Total acid number | mgKOH/g | 0.01 | 0.01 | 0.01 | 0.01 | 0.08 |

**Table 9**

| | | Examples | | Comparative Examples | | |
|---|---|---|---|---|---|---|
| | | 3 | 4 | 4 | 5 | 6 |
| CO₂ emissions | Well to Wheel gCO2/MJ | 32.3 | 45.4 | 78.1 | 32.3 | 37.8 |
| | Relative value | 41 | 58 | 100 | 41 | 48 |
| Oxidation stability test | Before accelerated deterioration mgKOH/g | 0.01 | 0.01 | 0.01 | 0.01 | 0.08 |
| | After accelerated deterioration mgKOH/g | 0.01 | 0.01 | 0.01 | 0.01 | 2.56 |
| Low temperature startability test using vehicle | | good | good | good | poor | poor |
| Aldehyde emissions | | 96 | 98 | 100 | 96 | 132 |

### [Brief Description of the Drawing]

Fig. 1 shows transient driving mode simulating actual running in the vehicle exhaust gas test and fuel consumption test.

## Claims

1. A gas oil composition comprising 10 to 80 percent by volume of a fraction with a 95% distillation temperature of 360°C or lower, a sulfur content of 10 ppm by mass or less and an oxygen content of 1 percent by mass or less, the fraction being produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements selected from aluminum, silicon, zirconium, boron, titanium and magnesium and one or more types of metals selected from the group consisting of the Groups 6A and 8 metals of the periodic table, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 180 to 480°C, the composition having a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less.

2. A gas oil composition comprising 10 to 80 percent by volume of a fraction with a ratio of the isoparaffin to the normal paraffin of 0.20 or greater, the fraction being produced by bringing in the presence of hydrogen a feedstock comprising an animal or vegetable fat and/or a component originating therefrom and a sulfur-containing hydrocarbon compound mixed therewith so that the total sulfur content of the mixture is from 1 to 2 ppm by mass, contact with a sulfide catalyst comprising a porous inorganic oxide comprising two or more types of elements selected from aluminum, silicon, zirconium, boron, titanium and magnesium and one or more types of metals selected from the group consisting of the Groups 6A and 8 metals of the periodic table, under conditions where the hydrogen pressure is from 2 to 13 MPa, the liquid hourly space velocity is from 0.1 to 3.0 h⁻¹, the hydrogen oil ratio is from 150 to 1500 NL/L, and the reaction temperature is from 180 to 480°C to produce a fraction with a 95% distillation temperature of 360°C or lower, a sulfur content of 10 ppm by mass or less and an oxygen content of 1 percent by mass or less, followed by hydrogenation with a catalyst comprising one or more types of metals selected from the group consisting of the Groups 6A and 8 metals of the periodic table, supported on a support containing a crystalline molecular sieve under conditions where the hydrogen pressure is from 2 to 13 MPa, the liquid hourly space velocity is from 0.1 to 3.0 h⁻¹, the hydrogen oil ratio is from 250 to 1500 NL/L, and the reaction temperature is from 150 to 380°C, the composition having a sulfur content of 10 ppm by mass or less, an oxygen content of 1 percent by mass or less, a fatty acid alkyl ester content of 3.5 percent by mass or less, an acid number of 0.13 mgKOH/g or less, a methanol content of 0.01 percent by mass or less and a glyceride content of 0.01 percent by mass or less.

3. The gas oil composition according to claim 1, wherein the composition is 40 percent by volume or more in an evaporation fraction at 300 °C "E300" from 0.05 or more to 0.25 or less in a ratio of the isoparaffin with two or more branches in the isoparaffin.

4. The gas oil composition according to claim 2, wherein the composition is 0.60 or greater in a ratio of the isoparaffin to the normal paraffin.

5. The gas oil composition according to claim 1 or 2, wherein the composition has a density at 15°C of 750 kg/m³ or greater, a pour point of -7.5°C or lower and a cold filter plugging point of -5°C or lower.
